# EUROPÄISCHE PATENTSCHRIFT

(11) **EP 3 624 072 B1**
(45) Veröffentlichungstag und Bekanntmachung des Hinweises auf die Patenterteilung: **01.11.2023**
(21) Anmeldenummer: 19197143.1
(22) Anmeldetag: 13.09.2019
(51) Int. Cl.: G07C 9/20, G06F 21/35, G06F 21/31, G06F 21/32

(54) **IDENTIFIZIERUNGSADAPTER UND IDENTIFIZIERUNGSEINRICHTUNG**
IDENTIFICATION ADAPTER AND IDENTIFICATION DEVICE
ADAPTATEUR D'IDENTIFICATION ET DISPOSITIF D'IDENTIFICATION

(30) Priorität: 17.09.2018 DE 102018122758
(43) Veröffentlichungstag der Anmeldung: 18.03.2020
(73) Patentinhaber: Astra Gesellschaft Für Asset Management MbH&Co. Kg, 30890 Barsinghausen (DE)
(72) Erfinder: Stobbe, Anatoli, 30890 Barsinghausen (DE); Stobbe, Nicolas, 30163 Hannover (DE)
(74) Vertreter: Kröncke, Rolf

(56) Entgegenhaltungen:
- EP-A1- 3 062 294
- US-A1- 2004 041 019
- US-A1- 2017 124 792

## Beschreibung

Die Erfindung betrifft einen Identifizierungsadapter für eine Identifizierungseinrichtung, die eine Leseeinheit und einen über eine Datenkommunikationsverbindung mit der Leseeinheit in Verbindung stehende Steuereinheit hat. Der Identifizierungsadapter hat eine Empfangseinheit zum drahtlosen Empfangen von Identifizierungsdaten und eine mit der Empfangseinheit verbundene Datenübertragungseinheit, die zum Übertragen der empfangenen Identifizierungsdaten auf derselben Datenkommunikationsverbindung der Leseeinheit an die Steuereinheit ausgebildet ist.

Die Erfindung betrifft weiterhin eine Identifizierungseinrichtung mit einem Lesegerät und einer Steuereinheit, die über eine Datenkommunikationsverbindung mit dem Lesegerät verbunden ist.

Für die Zutrittskontrolle, in der Zeiterfassung, Autorisierung und Freigabekontrolle beispielsweise bei der Verwaltung von Schlüsselschränken und Fachanlagen bzw. Übergabestationen sind Lesegeräte mit einer Eingabeschnittstelle bekannt, über die sich ein Benutzer mittels Identifizierungsdaten ausweist. Diese Identifizierungsdaten werden dann über eine drahtgebundene Datenkommunikationsverbindung an eine mit der Eingabeeinheit in Verbindung stehende Steuereinheit übertragen und dort verifiziert. In der Folge kann die Zutrittskontrolleinrichtung z.B. eine Tür in einem Gebäude oder ein Gebäudeteil freigeben oder bei nichtberechtigtem Zutrittsversuch gesperrt halten, oder die Zeit für den Arbeitsbeginn und Arbeitsende einer Person erfassen, oder ein Fach in einer Fachanlage öffnen und den darin aufbewahrten Gegenstand freigeben oder zurücknehmen . Die Eingabeeinheit eines Lesegeräts ist herkömmlicherweise als Nahbereichs-Empfänger oder Transceiver zum Auslesen von Daten eines Transponders (z.B. RFID) ausgebildet, kann aber auch eine Tastatur zur Eingabe eines PIN-Codes sein. Die Eingabeeinheit kann aber auch zur Erfassung der Identifizierungsdaten über biometrische Sensoren, wie Fingerprint-Sensoren, Iris-Detektoren oder ähnliches ausgebildet sein.

Weiterhin sind Funkschlösser bekannt, die drahtlos ein Identifizierungssignal empfangen, auswerten und zur Zutrittssteuerung nutzen.

US 2004/0041019 A1 offenbart ein biometrisches Identifikationssystem, bei dem die mit Iris- und Gesichtsfeldkameras ausgelesenen Identifizierungsdaten in einen Datenstrom eingefügt und zusammen mit Daten eines Tokenlesers auf der gleichen Datenkommunikationsverbindung weitergeleitet werden.

US 2017/0124792 A1 beschreibt ein Zugangskontrollsystem, bei dem ein Zugangskontrollleser die empfangenen Berechtigungsdaten in ein vorgegebenes alphanumerisches Format umwandelt und drahtgebunden an eine Zutrittssteuerung überträgt.

EP 3 062 294 A1 offenbart ein Verfahren zum Erweitern eines vorhandenen Zugriffskontrollsystems. Hierzu wird eine zur Funkkommunikation eingerichtete Abfangeinheit in eine verdrahtete Verbindung zwischen einer Token-Leseeinheit und einer Zugangssteuerung eingebracht. Mit einem Mobiltelefon kann eine Berechtigungsanforderung drahtlos an die Abfangeinheit übermittelt werden, die eine Umsetzung der Daten auf das Protokoll der verdrahteten Verbindung vornimmt und hierzu beispielsweise einen Wiegand-Leser emuliert.

Aufgabe der vorliegenden Erfindung ist es eine verbesserte Identifizierungseinrichtung zu schaffen, bei der eine aus einem Lesegerät und einer Steuereinheit bestehende Identifizierungseinrichtung für eine zusätzliche drahtlose Funkidentifizierung nachgerüstet werden kann.

Die Aufgabe wird durch einen Identifizierungsadapter mit den Merkmalen des Anspruchs 1 und die Identifizierungseinrichtung mit den Merkmalen des Anspruchs 8 gelöst. Vorteilhafte Ausführungsformen sind in den Unteransprüchen beschrieben.

Es wird vorgeschlagen, dass die Datenübertragungseinheit zur Umwandlung des ersten Datenformats der Identifizierungsdaten in das für die Datenkommunikationsverbindung zwischen Lesegerät und Steuereinheit vorgesehene zweite Datenformat eingerichtet ist. Dabei erfolgt eine Entschlüsselung der drahtlos empfangenen Identifizierungsdaten und eine Umsetzung der darin enthaltenen Identifizierungsnummer oder Identifizierungscodes in eine dem Nummernkreis der Steuereinheit entsprechende Identifizierungsnummer. Der Identifizierungsadapter ist somit eingerichtet, um eine komplexe verschlüsselte Identifizierungsnachricht eines mobilen Endgerätes nach dessen drahtlosem Empfang durch die Empfangseinheit in der Datenübertragungseinheit in ein von der Steuereinheit vorgegebenes Identifizierungsmuster umzusetzen.

Die Umwandlung der Datenformate beinhaltet zusätzlich hierzu auch eine Anpassung der unterschiedlichen Übertragungsprotokolle.

So ist denkbar, dass für das zweite Datenformat das entsprechende Wiegand-Protokoll gewählt ist. Die Datenübertragungseinheit des Identifizierungsadapters ist dann eingerichtet, dass die drahtlos empfangenen Identifikationsdaten gegebenenfalls nach Entschlüsselung in das Wiegand-Protokoll umzusetzen.

Der Identifizierungsadapter ist zur Streichung, Hinzufügung, Auswahl, Umwandlung (z.B. "Mapping") und/oder sonstige Änderung der empfangenen Identifizierungsdaten eingerichtet. Der Identifizierungsadapter ist somit zur Änderung der von der Empfangseinheit des Identifizierungsadapters empfangenen Identifizierungsdaten durch Streichung, Hinzufügung, Auswahl, Umgruppierung und/oder Umwandlung in einen von der Steuereinheit vorgegebenen Zeichencodebereich eingerichtet. Damit können z.B. unterschiedliche Nummernkreise oder Zeichensysteme auf den von der Steuereinheit bei der Zusammenwirkung mit dem Lesegerät genutzten und entsprechend vorgegebenen Zeichencodebereich angepasst werden, ohne dass die Steuereinheit an den von der Empfangseinheit empfangenen Zeichencodebereich der Identifizierungsdaten angepasst werden muss. Der Zeichencodebereich kann mehrere Datenbereiche für unterschiedliche Informationen, wie Objekt-/Anlagennummer und Benutzernummer vorgeben, die anhand der in den empfangenen Identifizierungsdaten enthaltenen Informationen vom Identifizierungsadapter entsprechend der Vorgaben der Steuereinheit in das an die Steuereinheit weiterzuleitende Datenpaket eingetragen werden.

Durch Mapping der Daten ist es möglich, die von der Empfangseinheit empfangenen Nummernkreise an die von der Steuereinheit vorgegebenen Nummernkreise anzupassen. Ein Benutzer kann hierbei die identische Benutzernummer sowohl für den Zugriff über das Lesegerät, als auch über die Empfangseinheit erhalten. Zur Vermeidung von Doppelidentitäten kann durch Zusatzinformation der Steuereinheit mitgeteilt werden, über welchen Zugang, entweder über das Lesegerät oder über die Empfangseinheit des Identifizierungsadapters, die Identifizierungsdaten bzw. die daraus abgeleiteten Daten an die Steuereinheit gelangt sind. So kann der Zugangsweg als Zusatzinformation zu einer Benutzerkennung im Zeichencodebereich der Steuereinheit mittels einer Kennung oder eines eigenen Nummernkreises übertragen werden. Denkbar ist aber auch, dass der Identifizierungsadapter ein Zusatzsignal an die Steuereinheit überträgt, wenn es sich um Identifizierungsdaten oder daraus abgeleitete Daten handelt, die von der Empfangseinheit erfasst wurden. Damit es auch möglich, dass die Steuereinheit feststellen kann, ob die Identifizierungsdaten von dem Lesegerät oder der Empfangseinheit des Identifizierungsadapter erfasst wurden.

Zur Nachrüstung von Identifizierungseinrichtungen wird somit ein zusätzlicher Identifizierungsadapter bereitgestellt, der zur drahtlosen Identifizierung mit einer entsprechenden Empfangseinheit ausgebildet ist. Dieser Identifizierungsadapter wird auf der physikalischen Ebene und der logischen Protokollebene in die bereits vorhandene Schnittstelle der Steuereinheit eingeschleift, die bereits für die Datenübertragungsverbindung zwischen Leseeinheit und Steuereinheit genutzt wird. Die Datenübertragungseinheit des Identifizierungsadapters ist somit eingerichtet, um die drahtlos empfangenen Identifizierungsdaten auf derselben Schnittstelle zwischen Leseeinheit und Steuereinheit an die Steuereinheit zu übertragen. Damit kann der Identifizierungsadapter mit seiner Datenkommunikationsverbindung einfach in die bestehende Datenkommunikationsverbindung zwischen Leseeinheit und Steuereinheit eingefügt werden, ohne Anpassungen an der Firmware der bestehenden Leseeinheit oder Steuereinheit vornehmen zu müssen.

Über die Umsetzung der drahtlos empfangenen Identifikationsdaten in das Übertragungsprotokoll auf physikalischer und logischer Protokollebene hinaus erfolgt eine Anpassung der Identifizierungsnachricht auf das von der Steuereinheit vorgegebene Identifizierungsmuster.

Unter Identifizierungsdaten werden alle individualisierten Daten verstanden, die zur Identifizierung dienen. Die Identifizierungsdaten müssen dabei nicht der Person oder dem Objekt, welche die Erfassungseinheit nutzen, eindeutig zur Identifizierung dieser Person oder dieses Objektes zugeordnet sein. Identifizierungsdaten können somit z.B. auch Authentifizierungsdaten sein, die ohne Identifizierung dennoch zur Berechtigungskontrolle geeignet sind. Bei einer solchen Authentifizierung kann z.B. die Person oder das Objekt als berechtigtes Mitglied einer Gruppe identifiziert werden. Identifizierungsdaten können z.B. auch Aktivierungscodes oder sonstige an die Steuereinheit zu übertragende Daten sein.

An eine Steuereinheit können auch mehrere Leseeinheiten über eine jeweilige Datenkommunikationsverbindung angeschlossen sein, wobei ein Identifizierungsadapter dann in eine jeweilige Datenkommunikationsverbindung des zugeordneten Lesegerätes zwischengeschaltet wird. Im Sinne der vorliegenden Erfindung ist der unbestimmte Begriff "ein" somit als solcher im Sinne von "mindestens ein" zu verstehen und nicht als Zahlwort.

Das Lesegerät und die Steuereinheit können jeweils entfernt voneinander anbringbar und über die Datenkommunikationsverbindung mittels Datenkabel miteinander verbindbar sein. Dann kann der Identifizierungsadapter einfach in die Kabelverbindung dieser beiden Geräte, d.h. zwischen Lesegerät und Steuereinheit mittels Steckverbindungen und eines weiteren Anschlusskabels zwischengeklemmt werden. Optional ist dabei denkbar, dass das Lesegerät dabei in einem eigenen Gehäuse separat von der Steuereinheit untergebracht ist. Dabei ist denkbar, dass das Lesegerät und die Steuereinheit ein übergeordnetes Außengehäuse teilen oder auch nicht.

Die Übertragung der empfangenen Identifizierungsdaten auf derselben Datenkommunikationsverbindung der Leseeinheit an die Steuereinheit kann beispielsweise mit einem Y-Kabel erfolgen, das in der Steuereinheit auf derselben Leitung zusammenläuft.

Denkbar ist aber auch, dass die Datenkommunikationsverbindung zwischen Lesegerät und Steuereinheit durch die zusätzliche Datenübertragungseinheit des Identifizierungsadapters durchgeschleift wird. Die Datenübertragungseinheit des Identifizierungsadapters kann hierzu mit der Leseeinheit verbindbar und zum Durchschleifen der Daten der Leseeinheit an die Steuereinheit ausgebildet sein. Dies hat den Vorteil, dass der Identifizierungsadapter durch Umstecken der Kabelverbinder der Datenkommunikationsverbindung einfach in die Datenkommunikationsverbindung zwischengeschaltet werden kann.

Die Datenkommunikationsverbindung kann eine leitungsgebundene unidirektionale serielle Datenübertragungsschnittstelle zur Eins-zu-Eins-Verbindung oder in Form eines Datenbusses sein. Eine solche Datenkommunikationsverbindung kann nach dem Wiegand-Standard ausgeführt sein, aber auch als Zwei-Draht-Schnittstelle / Bus nach anderen Protokollstandards wie 12C, RS232 oder anderer serieller oder paralleler Schnittstellen.

Die Empfangseinheit kann zum Empfangen von Identifizierungsdaten über eine kodierte Funknachricht von einem mobilen Endgerät eingerichtet sein. Das mobile Endgerät ist dabei zur drahtlosen Übertragung von Daten ausgebildet und kann beispielsweise ein Smartphone, ein Bluetooth-Beacon, ein Transponder mit Weitbereichs-RFID-Technologie und dergleichen sein. So ist es denkbar, dass auf einem Smartphone eine Softwareapplikation vorhanden ist, die über eine manuelle oder automatische Auslösung durch den Nutzer oder eines anderen Triggers, wie z.B. ein Funksignal, eine Identifizierung als eine kodierte Funknachricht mit Identifizierungsdaten an die Empfangseinheit überträgt. Diese Softwareapplikation kann dabei noch über das Mobilfunknetz mit einem Zutrittskontrollserver in Verbindung stehen, um eine zusätzliche Freigabekontrolle bereitzustellen.

Die Empfangseinheit kann für eine weitere Funktechnologie, die sich von der des Lesegerätes unterscheidet, wie z.B. zur Bluetooth-Kommunikation, WLAN-Kommunikation, Nahfeld-Kommunikation (NFC), Niedrigenergie-Weitverkehrsnetzwerk-Kommunikation (LPWAN), Weitfeld- oder Nahfeld-RFID-Kommunikation oder anderer Weitbereichs-Funktechnologien eingerichtet sein. Damit können nicht nur Smartphones als mobiles Endgerät, sondern z.B. auch Funkschlüssel oder Transponder mit aktiver oder passiver RFID-Technologie Identifizierungsadapters als weitere Möglichkeit zur Zutrittskontrolle genutzt werden.

Denkbar ist, dass der Identifizierungsadapter z.B. durch geeignete Programmierung eingerichtet ist, um eine vorbeschriebene Änderung der empfangenen Identifizierungsdaten gesteuert durch Steuerungsinformation in den empfangenen Identifizierungsdaten vorzunehmen. Die Änderungslogik, mit der eine Anpassung an den von der Steuereinheit vorgegebenen Zeichencodebereich gesteuert wird, kann somit in den von der Empfangseinheit empfangenen Identifizierungsdaten codiert sein. Damit kann eine Adaptierung des Identifizierungsadapters an die angeschlossene Steuerungseinheit zumindest teilweise auf die Codierung der Identifizierungsdaten verlagert werden.

Der Zeichencodebereich im Sinne der vorliegenden Erfindung kann durch den Aufbau eines Datenpakets, durch Nummernkreise und dergl. definiert sein.

Die Erfindung wird nachfolgend anhand eines Ausführungsbeispiels mit der beigefügten Zeichnung näher erläutert. Es zeigt:

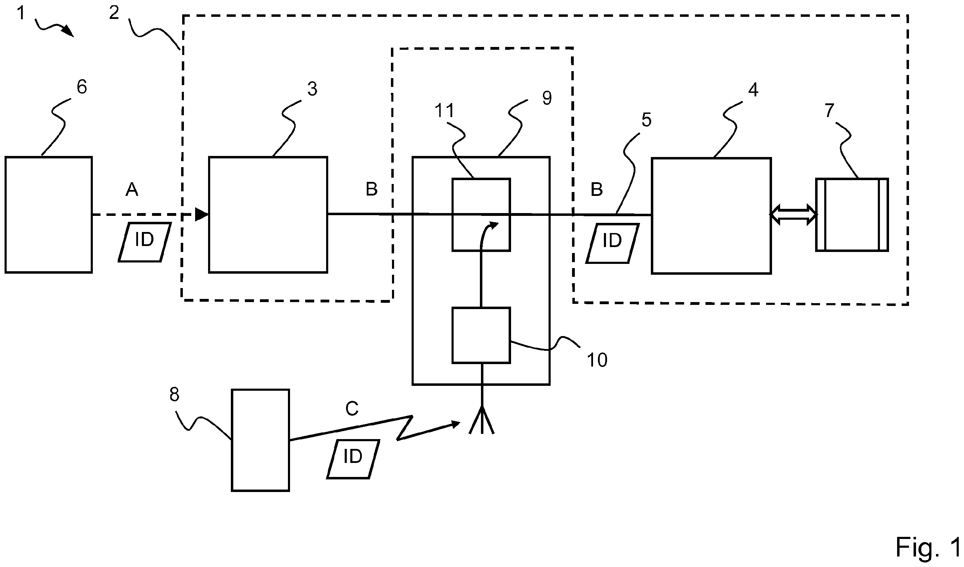

- Figur 1 -: Blockdiagramm einer Zutrittskontrolleinrichtung mit Lesegerät, Steuereinheit und Identifizierungsadapter.

Figur 1 zeigt ein Blockdiagramm einer Zugriffskontrolleinrichtung 1 mit einer Identifizierungseinrichtung 2, das eine Leseeinheit 3 und eine Steuereinheit 4 hat, wobei die Leseeinheit 3 und die Steuereinheit 4 über eine Datenkommunikationsverbindung 5 miteinander verbunden sind. Die Leseeinheit 3 ist ausgebildet, um eine Nachricht für die Zutritts-, Zugangs- oder Nutzerabfrage oder für die Identifizierung / Authentifizierung zur Zeiterfassung oder für eine sonstige Autorisierung und/oder Freigabe in einem ersten Datenformat A zu empfangen und die darin enthaltenen Identifizierungsdaten ID aus der Nachricht im Datenprotokoll zu extrahieren und über die Datenkommunikationsverbindung 5 an den Controller 4 zu übertragen. Dies kann beispielsweise in einem anderen Datenübertragungsprotokoll B erfolgen, das für die Datenkommunikation zwischen der Leseeinheit 3 und der Steuereinheit 4 durch die beiderseitige Sende- und Empfangslogik vorgegeben ist.

Die Leseeinheit 3 ist zur Erfassung der Identifizierungsdaten ausgebildet und kann hierzu beispielsweise eine einfache Eingabetastatur haben, über die der Nutzer einen Identifizierungs-PIN eingibt. Denkbar ist aber auch, dass die Leseeinheit 3 ein zum biometrischen Auslesen biometrischer Daten mit einem geeigneten biometrischen Sensor, wie beispielswiese Fingerprint- oder Iris-Scanner ausgerüstet ist. Die Leseeinheit 3 kann aber auch eine Empfangseinheit zum Empfangen eines Nahfeldsignals, z.B. NFC, von einer Smartcard oder einem RFID-Schlüssel 6 haben, der in das unmittelbare empfangsnahe Feld von einigen Zentimetern in die Nähe der Leseeinheit 3 gebracht wird.

Nach Erhalt der Identifizierungsdaten ID durch die Steuereinheit 4 erfolgt dort z.B. für eine Zutritts- oder Nutzerkontrolle eine Verifizierung der Zutrittsberechtigung. Hierzu können Zugangsrechte und zugehörige Ereignisse mit einer Verwaltungssoftware 7 synchronisiert werden, die mit der Steuereinheit 4 zusammenwirkt. In Abhängigkeit von dieser Validierung der Identifizierungsdaten ID kann dann ein geeignetes Ereignis, wie Freigabe einer Tür zu einem kontrollierten Raum oder Raumbereich eines Objektes erfolgen. Denkbar ist aber auch, dass die Steuereinheit für eine Zeiterfassung zur Aufzeichnung und/oder Weiterleitung der Identifizierungsdaten zusammen mit einem Zeitstempel ausgebildet ist, ohne eine Authentifizierung durchzuführen.

Oftmals ist es erwünscht, ein solches Zutrittskontrollgerät 2 dahingehend zu erweitern, dass eine Zutrittssteuerung auch über eine andere drahtlose Funkverbindung mit einem mobilen Endgerät 8 ermöglicht wird, das drahtlos eine Nachricht z.B. für eine Zutrittsanforderung in einem zweiten Funkkommunikationsprotokoll C aussendet.

Hierzu hat die Identifizierungseinrichtung 1 weiterhin einen Identifizierungsadapter 9 mit einer Empfangseinheit 10 zum drahtlosen Empfangen von Identifizierungsdaten ID im zweiten Funkkommunikationsprotokoll C. Die Empfangseinheit 10 kann beispielsweise zum Empfang und zur Auswertung eines HF-Signals von einem mobilen Endgerät 8, wie einem Smartphone oder einem Tablet eingerichtet sein. Geeignet hierzu ist eine Funkdatenkommunikation im zweiten Funkkommunikationsprotokoll C z.B. nach dem Bluetooth-, WiFi-, ZigBee-Standard oder einem sonstigen drahtlosen Funkkommunikationsprotokoll. Denkbar ist aber auch, dass die Empfangseinheit 10 zur Nahfeldkommunikation mit einem RFID-Funkschlüssel oder einer Smartcard eingerichtet ist, wenn das Lesegerät 3 keine solche drahtlose Eingabeschnittstelle hat, sondern lediglich beispielsweise eine Eingabetastatur und/oder biometrische Sensoren aufweist.

Die Empfangseinheit 10 des Identifizierungsadapters 9 ist mit einer Datenübertragungseinheit 11 verbunden. Diese ist zur Umsetzung des in der Zutrittsanfrage des mobilen Endgerätes 8 mit dem zweiten Funkkommunikationsprotokoll C enthaltenen Identifizierungsdaten ID in das Datenformat B der Datenkommunikationsverbindung 5 zwischen der Leseeinheit 3 und der Steuereinheit 4 eingerichtet. Diese Identifizierungsdaten ID werden dann über dieselbe Datenkommunikationsverbindung 5 an die Steuereinheit 4 geschickt, wie die von der Leseeinheit 3 stammenden Identifizierungsdaten ID. Hierzu ist die Datenkommunikationsverbindung von der Steuereinheit 4 zum Lesegerät 3 und der Empfangseinheit 10 des Identifizierungsadapters 9 gesehen in Art einer Y-Weiche aufgefächert. Die Daten sowohl der Leseeinheit 3 als auch des Identifizierungsadapters 9 werden dort in der Y-Weiche zusammengeführt bzw. die Datenübertragungseinheit 11 kann optional ausgebildet sein, sicherzustellen, dass nur eine der Einheiten, die Leseeinheit 3 oder die Datenübertragungseinheit 11 gleichzeitig Daten auf der Datenkommunikationsverbindung 5 überträgt. Die Wahrscheinlichkeit einer Kollision bei der Datenübertragung ist allerdings gering und kann auch durch Mehrfachübertragung im Kollisionsfall ausgeglichen werden, ohne dass eine Abstimmung der Nutzung derselben Datenkommunikationsverbindung erfolgen muss. Im Falle einer Datenkollision kann die Steuereinheit 4 eine Fehlfunktion verhindern. Da eine Datenkollision unwahrscheinlich ist, kann auf weitere Maßnahmen zur Kollisionsverhinderung verzichtet werden. Eine zusätzliche Antikollisionslogik ist unbeschadet dessen möglich.

Diese Datenkommunikationsverbindung 5 kann beispielsweise durch die Datenübertragungseinheit 11 des Identifizierungsadapters 9 durchgeschleift werden, wie skizziert. Dann ist die Datenübertragungseinheit 11 zum Aufspielen der in das erste Datenformat B konvertierten Identifizierungsdaten ID des mobilen Endgerätes 8 auf die Datenkommunikationsverbindung 5 ausgebildet.

Die Datenkommunikationsverbindung 5 kann beispielsweise eine unidirektionale serielle Datenübertragungs-Schnittstelle sein, die z.B. das Wiegand-Protokoll unterstützt. Denkbar sind aber auch andere geeignete Datenkommunikationsverbindungen, wie beispielsweise eine Zwei-Draht-Schnittstelle /-Bus z.B. nach dem 12C-Standard, ein CAN-Bus oder sonstige serielle oder parallele Schnittstellen, wie RS232 oder USB.

### Bezugszeichenliste

- 1: Identifizierungseinrichtung
- 2: Zutrittskontrollgerät
- 3: Leseeinheit
- 4: Steuereinheit
- 5: Datenkommunikationsverbindung
- 6: RFID Schlüssel
- 7: Verwaltungssoftware
- 8: Mobiles Endgerät
- 9: Identifizierungsadapter
- 10: Empfangseinheit
- 11: Datenübertragungseinheit

## Patentansprüche

1. Identifizierungsadapter (9) für eine Identifizierungseinrichtung (2), die eine Leseeinheit (3) und eine über eine Datenkommunikationsverbindung (5) mit der Leseeinheit (3) in Verbindung stehende Steuereinheit (4) hat, wobei der Identifizierungsadapter (9) eine Empfangseinheit (10) zum drahtlosen Empfangen von Identifizierungsdaten (ID) und eine Datenübertragungseinheit (11) hat, die zum Übertragen der empfangenden Identifizierungsdaten (ID) auf derselben Datenkommunikationsverbindung (5) der Leseeinheit (3) an die Steuereinheit (4) ausgebildet ist, wobei die Datenübertragungseinheit (11) zur Umwandlung des ersten Datenformats der von der Empfangseinheit (10) des Identifizierungsadapters (9) empfangenen Identifizierungsdaten (ID) in das für die Datenkommunikationseinheit (11) zwischen Lesegerät (3) und Steuereinheit (4) vorgesehene zweite Datenformat derart eingerichtet ist, dass eine Entschlüsselung der drahtlos empfangenen Identifizierungsdaten (ID) und eine Umsetzung der darin enthaltenen Identifizierungsnummer oder Identifizierungscodes in eine dem Nummernkreis der Steuereinheit (4) entsprechende Identifizierungsnummer mit einem von der Steuereinheit (4) vorgegebenen Identifizierungsmuster erfolgt, wobei die Datenübertragungseinheit (11) zur Änderung der von der Empfangseinheit (10) des Identifizierungsadapters (9) empfangenen Identifizierungsdaten (ID) durch Streichung, Hinzufügung, Auswahl, Umgruppierung und/oder Umwandlung in einen von der Steuereinheit (4) vorgegebenen Zeichencodebereich eingerichtet ist.

2. Identifizierungsadapter (9) nach Anspruch 1, wobei die Datenkommunikationsverbindung (5) eine leitungsgebundene uni- oder bidirektionale serielle oder parallele Datenübertragungsschnittstelle ist.

3. Identifizierungsadapter (9) nach Anspruch 1 oder 2, wobei die Datenübertragungseinheit (11) des Identifizierungsadapters (9) mit der Leseeinheit (3) verbindbar und zum Durchschleifen der Daten der Leseeinheit (3) an die Steuereinheit (4) ausgebildet ist.

4. Identifizierungsadapter (9) nach einem der vorhergehenden Ansprüche, wobei die Empfangseinheit (10) zum Empfangen von Identifizierungsdaten (ID) über eine kodierte Funknachricht von einem mobilen Endgerät (8) eingerichtet ist.

5. Identifizierungsadapter (9) nach einem der vorhergehenden Ansprüche, wobei die Empfangseinheit (10) zur Bluetooth-Kommunikation, WLAN-Kommunikation, NFC, Nahfeld-RFID-Kommunikation, Weitbereichs-RFID-Kommunikation oder zur Niedrigenergie-Weitverkehrnetzwerk-Kommunikation (LPWAN) eingerichtet ist.

6. Identifizierungsadapter (9) nach einem der vorhergehende Ansprüche, wobei das zweite Datenformat entsprechend dem Wiegand-Protokoll gewählt ist.

7. Identifizierungseinrichtung (1) mit einem Lesegerät (3), einer Steuereinheit (4), die über eine Datenkommunikationsverbindung (5) mit dem Lesegerät (3) verbunden ist, und einem Identifizierungsadapter (9) nach einem der vorhergehenden Ansprüche, der über dieselbe Datenkommunikationsverbindung (5) mit der Steuereinheit (4) verbunden ist.

8. Identifizierungseinrichtung (1) nach Anspruch 7, wobei das Lesegerät (3) und die Steuereinheit (4) jeweils entfernt voneinander anbringbar und über die Datenkommunikationsverbindung (5) mittels Datenkabel miteinander verbindbar sind.

9. Identifizierungseinrichtung (1) nach Anspruch 7 oder 8, wobei die Identifizierungseinrichtung (1) zur Zutrittskontrolle, Zeiterfassung, Autorisierung und/oder Freigabekontrolle eingerichtet ist.

## Claims

1. Identification adapter (9) for an identification device (2) having a reading unit (3) and a control unit (4) communicating with the reading unit (3) via a data communication link (5), the identification adapter (9) having a receiving unit (10) for wirelessly receiving identification data (ID) and a data transmitting unit (11) which is designed to transmit the received identification data (ID) on the same data communication link (5) from the reading unit (3) to the control unit (4), the data transmission unit (11) being set up to convert the first data format of the identification data (ID) received by the receiving unit (10) of the identification adapter (9) into the second data format provided for the data communication unit (11) between the reading unit (3) and the control unit (4) in such a way that a decryption of the wirelessly received identification data (ID) and a conversion of the identification number or identification codes contained therein into an identification number corresponding to the number range of the control unit (4) with an identification pattern predetermined by the control unit (4) takes place, wherein the data transmission unit (11) is adapted to change the identification data (ID) received by the receiving unit (10) of the identification adapter (9) by deleting, adding, selecting, regrouping and/or converting it into a character code range predetermined by the control unit (4).

2. Identification adapter (9) according to claim 1, wherein the data communication link (5) is a wired unidirectional or bidirectional serial or parallel data communication interface.

3. Identification adapter (9) according to claim 1 or 2, wherein the data transmission unit (11) of the identification adapter (9) is connectable to the reading unit (3) and is designed for looping through the data of the reading unit (3) to the control unit (4).

4. Identification adapter (9) according to one of the preceding claims, wherein the receiving unit (10) is arranged to receive identification data (ID) via a coded radio message from a mobile terminal (8).

5. Identification adapter (9) according to any one of the preceding claims, wherein the receiving unit (10) is arranged for Bluetooth communication, WLAN communication, NFC, near-field RFID communication, wide-area RFID communication, or low power wide-area network (LPWAN) communication.

6. Identification adapter (9) according to any one of the preceding claims, wherein the second data format is selected according to the Wiegand protocol.

7. Identification device (1) comprising a reader (3) of a control unit (4) connected to the reader (3) via a data communication link (5), and an identification adapter (9) according to any one of the preceding claims connected to the control unit (4) via the same data communication link (5).

8. Identification device (1) according to claim 7, wherein the reader (3) and the control unit (4) are each mountable remotely from each other and connectable to each other via the data communication link (5) by means of data cables.

9. Identification device (1) according to claim 7 or 8, wherein the identification device (1) is set up for access control, time recording, authorization and/or release control.

## Revendications

1. Adaptateur d'identification (9) destiné à un dispositif d'identification (2) qui comprend une unité de lecture (3) et une unité de commande (4) en communication avec l'unité de lecture (3) par l'intermédiaire d'une liaison de communication de données (5),
dans lequel
l'adaptateur d'identification (9) comprend une unité de réception (10), destinée à recevoir sans fil des données d'identification (ID), et une unité de transmission de données (11) qui est conçue pour transmettre les données d'identification reçues (ID) à l'unité de commande (4) sur la même liaison de communication de données (5) de l'unité de lecture (3),
l'unité de transmission de données (11) est conçue pour convertir le premier format de données des données d'identification (ID) reçues par l'unité de réception (10) de l'adaptateur d'identification (9) en le deuxième format de données prévu pour l'unité de communication de données (11) entre l'unité de lecture (3) et l'unité de commande (4), de telle sorte qu'il se produit un déchiffrage des données d'identification (ID) reçues sans fil et une conversion du numéro d'identification ou des codes d'identification qu'elles contiennent en un numéro d'identification correspondant à la série de numéros de l'unité de commande (4) avec un modèle d'identification prédéfini par l'unité de commande (4),
l'unité de transmission de données (11) est conçue pour modifier les données d'identification (ID) reçues par l'unité de réception (10) de l'adaptateur d'identification (9) par suppression, ajout, sélection, regroupement et/ou conversion en une plage de codes de caractères prédéterminée par l'unité de commande (4).

2. Adaptateur d'identification (9) selon la revendication 1,
dans lequel la liaison de communication de données (5) est une interface de transmission de données filaire, unidirectionnelle ou bidirectionnelle, en série ou en parallèle.

3. Adaptateur d'identification (9) selon la revendication 1 ou 2,
dans lequel l'unité de transmission de données (11) de l'adaptateur d'identification (9) peut être reliée à l'unité de lecture (3) et est conçue pour transmettre en boucle les données de l'unité de lecture (3) à l'unité de commande (4).

4. Adaptateur d'identification (9) selon l'une des revendications précédentes, dans lequel l'unité de réception (10) est conçue pour recevoir des données d'identification (ID) via un message radio codé provenant d'un terminal mobile (8).

5. Adaptateur d'identification (9) selon l'une des revendications précédentes, dans lequel l'unité de réception (10) est conçue pour une communication Bluetooth, une communication WLAN, une communication NFC, une communication RFID en champ proche, une communication RFID en champ lointain ou une communication en réseau local étendu à faible énergie (LPWAN).

6. Adaptateur d'identification (9) selon l'une des revendications précédentes, dans lequel le deuxième format de données est sélectionné conformément au protocole Wiegand.

7. Dispositif d'identification (1) comprenant une unité de lecture (3), une unité de commande (4) qui est reliée à l'unité de lecture (3) par une liaison de communication de données (5), et un adaptateur d'identification (9) selon l'une des revendications précédentes, qui est relié à l'unité de commande (4) par la même liaison de communication de données (5).

8. Dispositif d'identification (1) selon la revendication 7,
dans lequel l'unité de lecture (3) et l'unité de commande (4) peuvent être montées chacune à distance l'une de l'autre et peuvent être reliées entre elles par la liaison de communication de données (5) au moyen d'un câble de données.

9. Dispositif d'identification (1) selon la revendication 7 ou 8,
dans lequel le dispositif d'identification (1) est conçu pour le contrôle d'accès, l'enregistrement horaire, l'autorisation et/ou le contrôle de validation.
